# EUROPEAN PATENT APPLICATION

(11) **EP 1 883 098 A2**
(43) Date of publication of application: **30.01.2008**
(21) Application number: 07108804.1
(22) Date of filing: 24.05.2007
(51) Int. Cl.: H01J 61/92, H01J 61/30

(54) **Surface light source device and backlight unit having the same**

(30) Priority: 29.05.2006 KR 20060048061
(71) Applicant: Samsung Corning Co., Ltd., Suwon-si, Gyeonggi-do 442-732 (KR)
(72) Inventor: Hong, Jae Seon SAMSUNG CORNING CO. LTD., Yeongtong-gu, Suwon-si, Gyeonggi-do 443-270 (KR); Kim, Keon Yong SAMSUNG CORNING CO. LTD., Yeongtong-gu, Suwon-si, Gyeonggi-do 443-270 (KR); Lee, Tae Soo SAMSUNG CORNING CO. LTD., Yeongtong-gu, Suwon-si, Gyeonggi-do 443-270 (KR); Song, Hee Soo SAMSUNG CORNING CO. LTD., Yeongtong-gu, Suwon-si, Gyeonggi-do 443-270 (KR); Kim, Dae Sung SAMSUNG CORNING CO. LTD., Yeongtong-gu, Suwon-si, Gyeonggi-do 443-270 (KR); Kim, Keun Yung SAMSUNG CORNING CO. LTD., Yeongtong-gu, Suwon-si, Gyeonggi-do 443-270 (KR)
(74) Representative: Hengelhaupt, Jürgen

(57) **Abstract**

There is provided a surface light source comprising a plurality of discharge channels, in which each end of the outermost discharge channel is expanded towards a sealing part. At least one of the plurality of discharge channels may include a curved surface part and a flat surface part on a top surface thereof. Both ends of the discharge channel may be formed to be higher than a middle portion thereof, and the discharge channels may be formed to be different in height. Accordingly, the discharge characteristic is improved and bad luminance uniformity is solved by variously changing the shape of the discharge channel forming the discharge space in a surface light source. Furthermore, the present invention solves the problems, such as failure in lighting at low temperature, channeling between adjacent channels, and maintains the quality of molded products.

## Description

### CROSS-REFERENCE TO RELATED APPLICATION

This application claims the benefit of Korean Patent Application No. 2006-0048061, filed on May 29, 2006, the disclosure of which is hereby incorporated herein by reference in its entirety.

### BACKGROUND OF THE INVENTION

### 1. Technical Field

The present invention relates to a surface light source device, and more particularly, a surface light source device in a new structure of controlling a light-emitting characteristic by changing the shape of a discharge channel, and a backlight unit having the same.

### 2. Discussion of Related Art

A liquid crystal display (LCD) device displays an image, using an electrical characteristic and an optical characteristic of liquid crystal. Since the LCD device is very small in size and light in weight, compared to a cathode-ray tube (CRT) device, it is widely used for portable computers, communication devices, liquid crystal television (LCTV) receivers, aerospace industry, and the like.

The LCD device includes a liquid crystal controlling part for controlling the liquid crystal, and a backlight source for supplying light to the liquid crystal. The liquid crystal controlling part includes a number of pixel electrodes disposed on a first substrate, a single common electrode disposed on a second substrate, and liquid crystal interposed between the pixel electrodes and the common electrode. The number of pixel electrodes corresponds to resolution, and the single common electrode is placed in opposite to the pixel electrodes. Each pixel electrode is connected to a thin film transistor (TFT) so that each different pixel voltage is applied to the pixel electrode. An equal level of a reference voltage is applied to the common electrode. The pixel electrodes and the common electrode are made of a transparent conductive material.

The light supplied from the backlight source passes through the pixel electrodes, the liquid crystal and the common electrode sequentially. The display quality of an image passing through the liquid crystal significantly depends on luminance and luminance uniformity of the backlight source. Generally, as the luminance and luminance uniformity are high, the display quality is improved.

In a conventional LCD device, the backlight source generally uses a cold cathode fluorescent lamp (CCFL) in a bar shape or a light emitting diode (LED) in a dot shape. The CCFL has high luminance and long life of use and generates a small amount of heat, compared to an incandescent lamp. The LED has high consumption of power but has high luminance. However, in the CCFL or LED, the luminance uniformity is weak. Therefore, to increase the luminance uniformity, the backlight source, which uses the CCFL or LED as a light source, needs optical members, such as a light guide panel (LGP), a diffusion member and a prism sheet. Consequently, the LCD device using the CCFL or LED becomes large in size and heavy in weight due to the optical members.

Therefore, a surface light source device in a flat shape has been suggested as the light source of the LCD device.

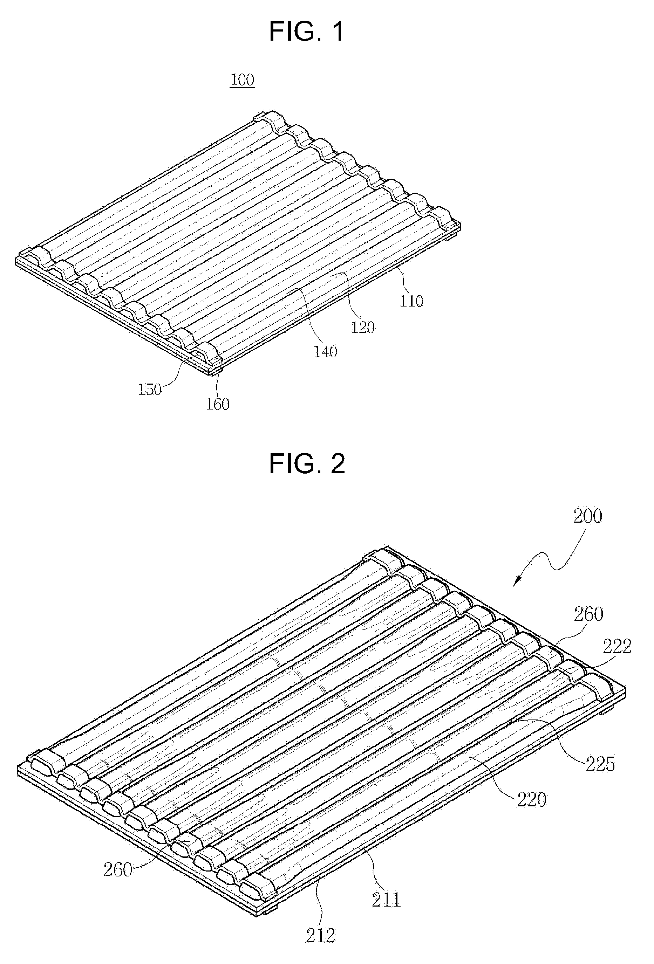

FIG. 1 is a perspective view illustrating an example of a typical surface light source device. Referring to FIG. 1, a conventional surface light source device 100 includes a light source body 110 and electrodes 160 positioned on the outer surface at both edges of the light source body 110. The light source body 110 includes a first substrate and a second substrate which are positioned in parallel to each other and spaced apart from each other at a predetermined distance. A number of partitioning parts 140 are positioned between the first and second substrates, thereby dividing the space between the first and second substrates into a plurality of discharge spaces 150. A sealing member (not shown) is positioned between the edges of the first and second substrates, thereby isolating the discharge spaces 150 from the outside. A discharge gas is injected into a discharge space 150 inside each discharge channel.

To discharge the surface light source device, electrodes are formed on both or any one of the first and second substrates. The electrode has a strip shape or an island shape to have the same area per discharge channel. When the surface light source device is driven by an inverter, all channels thereof are uniformly discharged.

However, in the conventional surface light source device, since the light-emitting characteristic is different depending on the positions of discharge channels, the luminance uniformity is not good. Furthermore, a dark region results from channeling which is caused by the interference between the adjacent channels. Moreover, there are many technical problems to be solved for a bigger surface light source device.

### SUMMARY OF THE INVENTION

Therefore, the present invention is directed to provide a surface light source device which controls a light-emitting characteristic of a plurality of discharge channels.

Another object of the present invention is to provide a surface light source device which improves luminance uniformity.

Another object of the present invention is to provide a surface light source device which improves a yield of products of high quality.

In accordance with a first technical aspect of the present invention, there is provided a surface light source, comprising: a first substrate; a second substrate connected to the first substrate, to form a plurality of discharge channels; a sealing part formed at the edges between the first substrate and the second substrate; and an electrode part formed on a surface of at least one of the first substrate and the second substrate, and each end of the outermost discharge channel, among the plurality of discharge channels, being expanded towards the sealing part.

In the surface light source device according to the first aspect of the present invention, preferably, an interval between adjacent discharge channels is constant in a direction of a length of the discharge channels.

In accordance with a second aspect of the present invention, there is provided a surface light source device comprising: a first substrate; a second substrate connected to the first substrate, to form a plurality of discharge channels; a sealing part formed at the edges between the first substrate and the second substrate; and an electrode part formed on a surface of at least one of the first substrate and the second substrate, and at least one of the plurality of discharge channels includes a curved surface part and a flat surface part on a top surface thereof.

Preferably, in the surface light source device according to the second aspect of the present invention, the electrode part may be positioned on the flat surface part of the discharge channel.

The surface light source devices according to the first and second aspects of the present invention may have the following additional characteristics. For example, a top surface of the outermost discharge channel, among the plurality of discharge channels of the surface light source device, may be formed to be a flat surface. Further, at least one of the discharge channels may be formed so that both ends are higher, in height, than a middle portion. Further, an outer discharge channel, among the plurality of discharge channels, may be formed to be higher, in height, than a middle discharge channel.

The above-described basic and additional characteristics may be achieved by forming the shape of the first or second substrate of the surface light source device to have the above characteristics or by inserting an additional molded part between the first and second substrates.

In accordance with a third aspect of the present invention, there is provided a backlight unit comprising: the surface light source device; a case for receiving the surface light source device, an optical sheet interposed between the surface light source device and the case; and an inverter for supplying a discharge voltage to drive the surface light source device.

In accordance with the present invention, a discharge characteristic is improved and bad luminance uniformity is solved by variously changing the shape of the discharge channel to form a discharge space in a surface light source. Furthermore, the present invention solves the problems, such as failure in lighting at low temperature, channeling between adjacent channels and maintains the quality of molded products.

### BRIEF DESCRIPTION OF THE DRAWINGS

The above and other features and advantages of the present invention will become more apparent to those of ordinary skill in the art by describing in detail preferred embodiments thereof with reference to the attached drawings in which:
FIG. 1 is a perspective view illustrating an example of a conventional surface light source device;
FIG. 2 is a perspective view illustrating a surface light source device according to an embodiment of the present invention;
FIG. 3 is a plan view of the surface light source device according to the embodiment of the present invention;
FIG. 4A is a perspective view of an outermost discharge channel positioned in the surface light source device according to the embodiment of the present invention;
FIG. 4B is a sectional view taken along line Y-Y' of FIG. 4A;
FIG. 4C is a sectional view of an outermost discharge channel in a surface light source device according to another embodiment of the present invention;
FIG. 5A is a perspective view of a discharge channel of the surface light source device according to the embodiment of the present invention;
FIG. 5B is a sectional view taken along line Z-Z' of FIG. 5A;
FIG. 6 is a sectional view taken along line X-X' of FIG. 3;
FIG. 7 is a side view of a discharge channel in the surface light source device according to the embodiment of the present invention; and
FIG. 8 is a perspective view of a backlight unit including the surface light source device according to the embodiment of the present invention.

### DETAILED DESCRIPTION OF THE INVENTION

The present invention will now be described more fully hereinafter with reference to the accompanying drawings, in which preferred embodiments of the invention are shown.

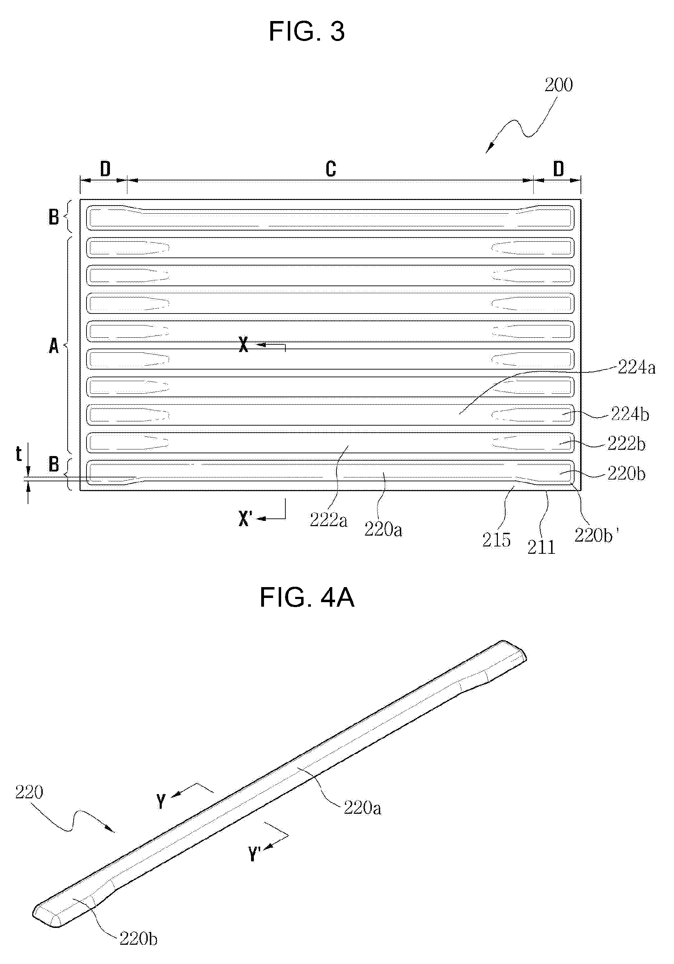

FIG. 2 is a perspective view illustrating a surface light source device 200 according to an embodiment of the present invention, and FIG. 3 is a plan view of the surface light source device 200 from which an electrode part is removed. In the surface light source device 200, a first substrate 211 and a second substrate 212 are connected to each other, to form a plurality of discharge channels 222. For example, the discharge channels 222 may be formed by molding the first substrate 211 in a predetermined shape. Alternatively, an additional molded part may be interposed in the space between the first substrate 211 and the second substrate 212, to divide the space into a plurality of the discharge spaces. The edges of the first substrate 211 and the second substrate 212 are sealed by a sealing material. A fluorescent material is applied on the inside surface of each discharge channel, that is, the inside of the first and second substrates 211, 212. A reflection layer may be further formed on the inside of the second substrate.

A partitioning part 225 is formed between the discharge channels 222, to spatially isolate discharge channels from adjacent channels 222. The partitioning part 225 defines the interval between the adjacent discharge channels 222. In the surface light source device 200 according to the embodiment of the present invention, the partitioning parts 225 are formed so that the interval between the adjacent channels 222 is constant in the direction of a length of the discharge channels 222.

The discharge channel 222 forms a discharge space extended to be long in a bar shape. Electrode parts 260 are formed on both ends of each discharge channel 222. A middle portion of the discharge channel 222 is an active area for emitting the light generated in the discharge channel 222 outward (through one surface of the surface light source device). The inside of the discharge channel 222 may include a discharge gas, such as mercury gas, xenon gas, argon gas, and other inactive gases.

The electrode parts 260 are formed on both ends of the discharge channels 222 positioned in parallel with each other and on each partitioning part 225 between the discharge channels, to be perpendicular to the direction of the length of the discharge channels.

The most important characteristic of the surface light source device according to the embodiment of the present invention is that the shape of the outermost discharge channel 220 (region "B" in FIG. 3), among the plurality of discharge channels, is different from that of the other discharge channels (region "A" in FIG. 3). As illustrated in FIGS. 2 and 3, both ends 220b of the outermost discharge channel 220 are expanded towards the edge of the surface light source device differently from the middle portion 220a of the discharge channel 220. Preferably, both ends 220b may be expanded by a predetermined width t towards the sealing part 215 connecting the edges between the first substrate 211 and the second substrate 212.

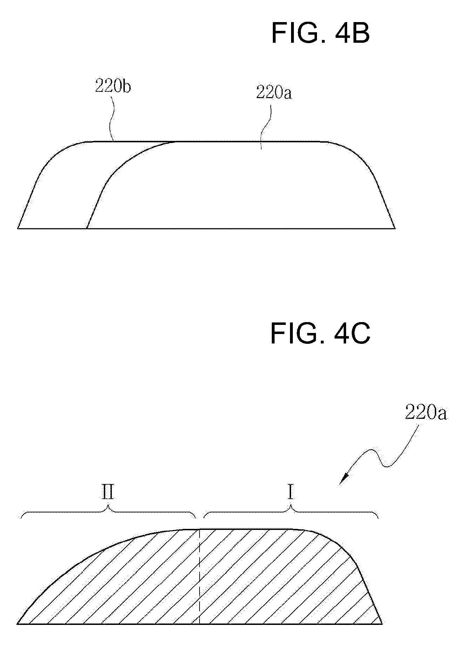

Referring to FIGS. 4A and 4B, it is clear that the area of each end 220b of the outermost discharge channel 220 is formed to be greater than the area of the middle portion 220a thereof.

As both ends 220b of the outermost discharge channel 220 are expanded, the spaces in both ends 220b of the discharge channel 220 are increased, and the area of the electrode to be positioned on each of both ends 220b is increased. Therefore, the discharge characteristic at the edge of the surface light source device 200 is improved. Further, the top surface of the outermost discharge channel 220 is formed to be flat. This flat structure of the top surface provides a larger surface area and increases the area of the electrode formed on each end of the discharge channel. Therefore, the discharge characteristic of the discharge channel is improved.

Alternatively, both ends of the discharge channel may be expanded inward rather than towards the edge of the surface light source device 200. However, in this case, since the width of the partitioning part 225 between the adjacent discharge channels is reduced, channeling may be occurred by the interference between the adjacent channels, or failure in lighting at low-temperature may be caused. When the discharge channels are divided by narrow partitions without sufficient intervals, the quality of molded products may decrease and as a result, the yield of products of good quality may be lowered.

The present invention has the significant meaning in improving the discharge characteristic while removing the aforementioned problems.

As described in FIG. 4C, the outermost discharge channel 220 may be formed in a dual surface shape so that the section of the middle portion 220a thereof has a straight line portion I and a curved line portion II. In this dual surface shape, the straight line portion I reduces the light radially emitted from the outermost discharge channel 220 towards the outer edge (of the surface light source device), and the curved line portion II allows the light to be radially emitted towards the center (of the surface light source device), to reduce a dark region (or a bright line) occurred by the partitioning parts 225. Furthermore, the outermost discharge channel 220 may be formed in a tri-surface shape in section, to result in different light-emitting characteristics.

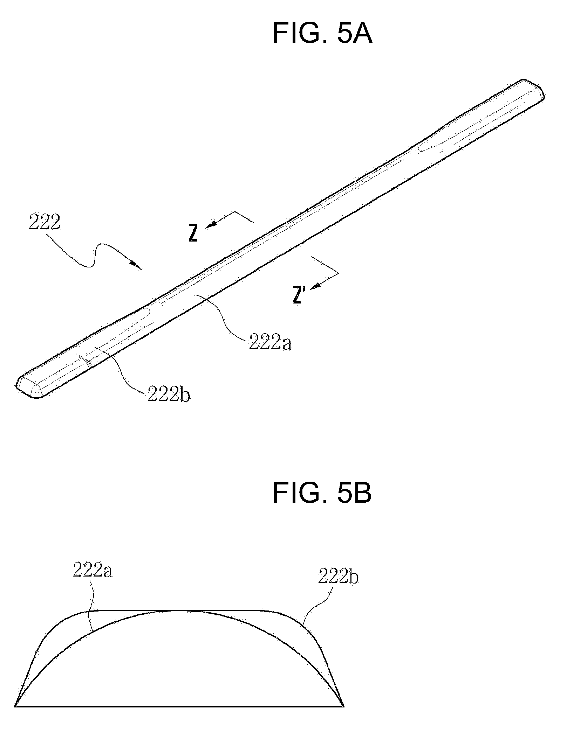

Another characteristic of the present invention is that, referring to FIGS. 2 and 3, at least one of the discharge channels 222 has the top surface of different shapes, for example, with both ends of flat surfaces and a middle portion of a curved surface. As specifically illustrated in FIGS. 5A and 5B, a middle portion 222a of the discharge channel 222 has a round semi-spherical shape and both ends 222b have a trapezoid or square shape with the flat top surface. Therefore, the space in the middle portion 222a of the discharge channel 222 is different from that in both ends 222b thereof in size, and the surface area of the middle portion 222a is different from that of both ends 222b.

The middle portion 222a of the discharge channel 222 represented as region "C" in FIG. 3 corresponds to the active area of the surface light source device 200. The round middle portion 222a weakens the dark region caused by the partitioning parts, by allowing the light generated by discharge to be emitted at various angles, and thus improves the luminance uniformity of the surface light source device. Both ends 222b of the discharge channel 222, on which the electrode parts 260 are formed, represented as region "D" in FIG. 3, have the flat top surfaces. When the top surfaces of both ends 222b are same as the middle portion 222a in height, the volume in both ends 222b is greater than that in the middle portion 222a, and the area on both ends 222b is also greater than that on the middle portion 222a. Therefore, the area of the electrode positioned at each end of the discharge channel is increased and the sufficient space for electronic charge is obtained.

As described above, the light-emitting efficiency of the surface light source device is maximized by partially differentiating the surface shape of the discharge channel.

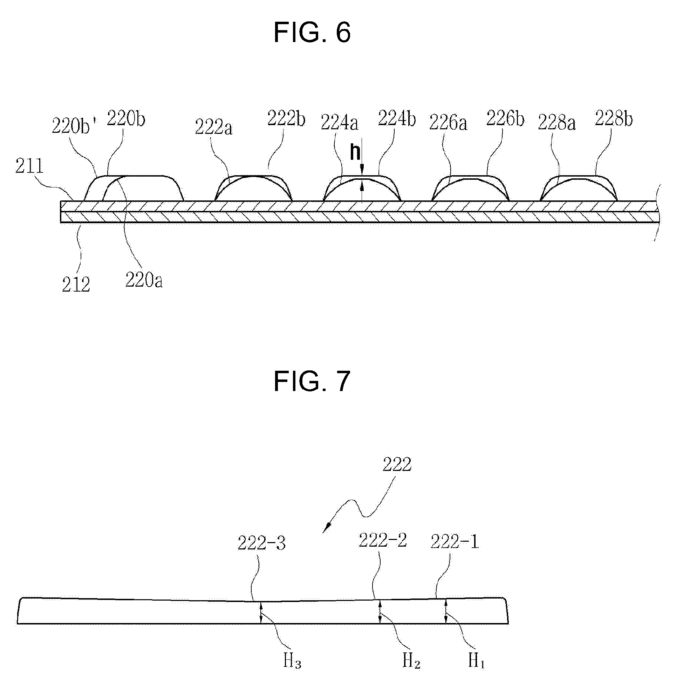

Further, the surface light source device according to the present invention may have different discharge spaces by differentiating the heights of the discharge channels, and it consequently accurately controls the light-emitting characteristic. Referring to FIG. 6, a plurality of discharge channels are positioned at regular intervals, and the discharge channel has portions in different surface shapes depending on the positions, as described with reference to FIG. 3, that is, both ends 222b, 224b, 226b and 228b having trapezoid surfaces and middle portions 222a, 224a, 226a and 228a having round surfaces. As described above, the middle portions 222a, 224a, 226a and 228a forming the areas where the light is substantially emitted, that is, the active areas of the surface light source device 200, are formed to be different from one another in height. For example, a second discharge channel from the left in FIG. 6 is formed such that the height of the middle portion 222a is the same as that of both ends 222b. However, the discharge channel positioned at the right is formed such that the height of the middle portion 224a is lower by h than that of both ends 224b. Further, a plurality of the discharge channels may be formed to become progressively lower (in a tiered shape) in height, from the outermost discharge channel to the middle discharge channel.

The discharge spaces may be formed different from each other by differentiating the discharge channels in height, preferably, by differentiating, in height, the middle portions of the discharge channels forming the active areas. As a result, the light-emitting characteristic of each region of the surface light source device is differentially controlled. Accordingly, the discharge efficiency of the outer edge region in which the luminance is relatively low becomes similar to that of the inner middle region and the luminance uniformity of the surface light source device is improved.

Meanwhile, the surface light source device according to an embodiment of the present invention can realize various discharge characteristics by differentiating the height depending on the positions in one discharge channel as well as by differentiating the height of each discharge channel. As described in FIG. 7, the height H1, H2, H3 of portions 222-1, 222-2 and 222-3 of a discharge channel 222 are differently formed. Therefore, the size of the discharge space of each portion of the discharge channel is different.

As illustrated in FIGS. 6 and 7, the non-uniformity of the light-emitting characteristic of the surface light source device can be effectively controlled by differentiating the size of the discharge space at each region or portion. Specifically, the failure in emitting light, which is caused at the outer discharge channels of the surface light source device and at both ends of the discharge channel, is solved and the luminance of the surface light source device is improved to be uniform.

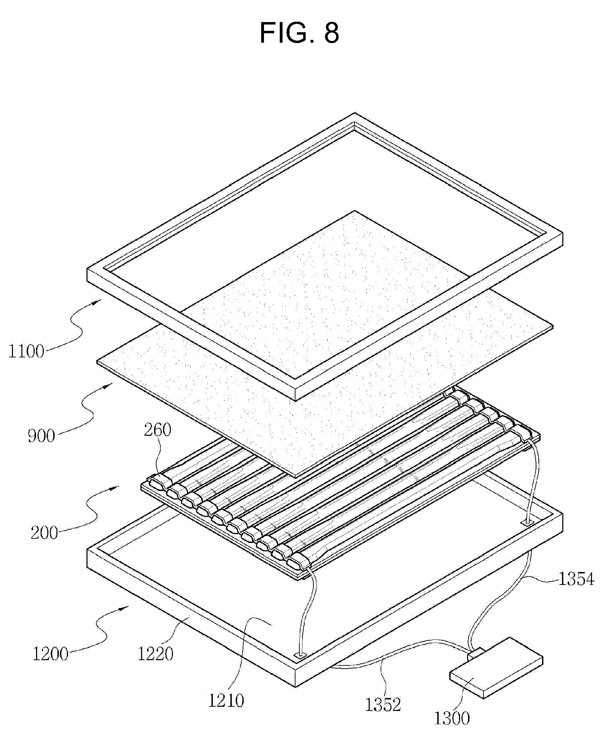

FIG. 8 is a perspective view of a backlight unit including the surface light source device according to an embodiment of the present invention. The backlight unit comprises a surface light source device 200 illustrated in FIG. 2, upper and lower cases 1100 and 1200, an optical sheet 900 and an inverter 1300.

The lower case 1200 includes a bottom 1210 and a plurality of sidewall parts 1220. The bottom 1210 is configured to receive the surface light source device 200, and the sidewall parts 1220 are extended from the edges of the bottom 1210 to form a receiving space. The surface light source device 200 is received in the receiving space of the lower case 1200.

The inverter 1300 is positioned at the rear surface of the lower case 1200 and generates a discharge voltage to drive the surface light source device 200. The discharge voltage generated from the inverter 1300 is supplied to electrodes 260 of the surface light source device 200 through first and second power lines 1352 and 1354, respectively.

The optical sheet 900 may include a diffusion plate (not shown) for uniformly diffusing the light emitted from the surface light source device 200, and a prism sheet (not shown) for providing the diffused light with linearity. The upper case 1100 is connected to the lower case 1200, to support the surface light source device 200 and the optical sheet 900. The upper case 1100 prevents the surface light source device 200 from separated out of the lower case 1200.

As described above, according to the surface light source device of the present invention, the discharge channel forming the discharge area can be embodied in various shapes by appropriately changing the shape of the substrate of the surface light source device. Further, the surface light source device of the present invention has advantages of improving the entire light-emitting characteristic of the device through the change in shapes of the discharge channels and removing the non-uniformity of the light-emitting characteristic. Further, problems such as the failure in lighting at low-temperature, the channeling between adjacent channels, and the like can be solved. The quality of molded products can be maintained. Therefore, the present invention significantly contributes to a large-sized surface light source device.

The invention has been described using preferred exemplary embodiments. However, it is to be understood that the scope of the invention is not limited to the disclosed embodiments. On the contrary, the scope of the invention is intended to include various modifications and alternative arrangements within the capabilities of persons skilled in the art using presently known or future technologies and equivalents. For example, the present invention is applicable to an embodiment where the space between the upper substrate and the lower substrate is divided into a plurality of discharge channels by independent partitions as well as the embodiment where the upper substrate and the lower substrate partially contact to each other by changing the shape of the substrate, to form a plurality of discharge channels, without independent partitions. Further, in the present invention, the length and number of the discharge channels are not limited to the aforementioned embodiment and may increase depending on the size of a surface light source. The scope of the claims, therefore, should be accorded the broadest interpretation so as to encompass all such modifications and similar arrangements.

## Claims

1. A surface light source device, comprising:
a first substrate;
a second substrate connected to the first substrate, to form a plurality of discharge channels;
a sealing part formed at the edges between the first substrate and the second substrate; and
an electrode part formed on a surface of at least one of the first substrate and the second substrate,
wherein each end of the outermost discharge channel, among the plurality of discharge channels, is expanded towards the sealing part.

2. The surface light source device of claim 1, wherein an interval between adjacent discharge channels is constant in a direction of the length of the discharge channels.

3. The surface light source device of claim 1, wherein a top surface of the outermost discharge channel is flat.

4. The surface light source device of claim 1, wherein at least one of the plurality of discharge channels comprises a flat surface part and a curved surface part in a top surface thereof.

5. The surface light source device of claim 1, wherein at least one of the plurality of discharge channels is shaped such that both ends thereof are greater than a middle portion thereof in surface area.

6. The surface light source device of claim 1, wherein at least one of the plurality of discharge channels is shaped such that both ends thereof are higher, in height, than a middle portion thereof.

7. The surface light source device of claim 1, wherein an outer discharge channel, among the plurality of discharge channels, is higher, in height, than a middle discharge channel.

8. The surface light source device of claim 7, wherein the plurality of discharge channels become progressively lower in height, in a direction from the outer discharge channel to the middle discharge channel.

9. The surface light source device of claim 1, wherein a section of the outermost discharge channel comprises at least two parts of a curved line part and a straight line part.

10. A surface light source device, comprising:
a first substrate;
a second substrate connected to the first substrate, to form a plurality of discharge channels;
a sealing part formed at the edges between the first substrate and the second substrate; and
an electrode part formed on a surface of at least one of the first substrate and the second substrate,
wherein at least one of the plurality of discharge channels includes a curved surface part and a flat surface part on a top surface thereof.

11. The surface light source device of claim 10, wherein the electrode part is positioned on the flat surface part of the discharge channel.

12. The surface light source device of claim 10, wherein each end of the outermost discharge channel, among the plurality of discharge channels, is expanded towards the sealing part.

13. The surface light source device of claim 10, wherein at least one of the plurality of discharge channels is shaped such that both ends thereof is higher, in height, than a middle portion thereof.

14. The surface light source device of claim 10, wherein an outer discharge channel, among the plurality of discharge channels, is higher, in height, than a middle discharge channel.

15. The surface light source device of claim 14, wherein the plurality of discharge channels become progressively lower in height, in a direction from the outer discharge channel to the middle discharge channel.

16. The surface light source device of claim 10, wherein a section of the outermost discharge channel, among the plurality of discharge channels, comprises at least two parts of a curved line part and a straight line part.

17. A backlight unit comprising the surface light source device of claim 1 or claim 10.
